# EUROPÄISCHE PATENTSCHRIFT

(11) **EP 1 293 255 B1**
(45) Veröffentlichungstag und Bekanntmachung des Hinweises auf die Patenterteilung: **07.12.2005**
(21) Anmeldenummer: 02018697.9
(22) Anmeldetag: 21.08.2002
(51) Int. Cl.: B03D 1/24, B03D 1/14, B01F 5/06, C02F 1/24

(54) **Verfahren und Vorrichtung zur Abtrennung von Störstoffen aus Suspensionen durch Flotation**
Method and device for separating impurities from suspensions by flotation
Procédé et dispositif de séparation de saletés de suspensions par flottation

(30) Priorität: 17.09.2001 AT 14572001
(43) Veröffentlichungstag der Anmeldung: 19.03.2003
(73) Patentinhaber: Andritz AG, 8045 Graz (AT)
(72) Erfinder: Scherzinger, Bernhard, Dr. Dipl.-Ing., 1030 Wien (AT); Gabl, Helmuth, Dr. Dipl.-Ing., 8046 Graz (AT)
(74) Vertreter: Schweinzer, Friedrich

(56) Entgegenhaltungen:
- DE-A- 3 717 947
- DE-A- 4 208 370
- FR-A- 2 371 968
- US-A- 3 799 350
- US-A- 5 395 569
- US-A- 5 616 240
- DATABASE WPI Section Ch, Week 198815 Derwent Publications Ltd., London, GB; Class D13, AN 1988-104176 XP002266233 -& SU 1 337 007 A (IRKUTSK ZHDANOV UNIV), 15. September 1987 (1987-09-15)
- DATABASE WPI Section Ch, Week 199525 Derwent Publications Ltd., London, GB; Class B07, AN 1995-192199 XP002265659 -& RU 2 021 848 C (ALFA-FOTO RES PRODN COOP), 30. Oktober 1994 (1994-10-30)

## Beschreibung

Die Erfindung betrifft ein Verfahren zur Abtrennung von Störstoffen aus Suspensionen durch Flotation, umfassend die Belüftung einer Flüssigkeit mit Gas bis zur Sättigung und anschließendes Entspannen der gasgesättigten Flüssigkeit unter Bildung von Gasbläschen, sowie eine Vorrichtung zum Erzeugen von Gasbläschen in einer gasgesättigten Flüssigkeit und eine Vorrichtung zur Abtrennung von Störstoffen aus Suspensionen durch Flotation, umfassend zumindest Vorrichtungen zur Belüftung einer Flüssigkeit mit Gas bis zur Sättigung, zum anschließenden Entspannen der gasgesättigten Flüssigkeit unter Bildung von Gasbläschen, zur Einbringung der Flüssigkeit samt Gasbläschen in die Suspension und eine Flotationszelle.

Die Entspannungsflotation ist ein physikalisches Verfahren zur Abtrennung von Störstoffen aus Suspensionen. Dieses Verfahren ist an die Erzeugung von Gasblasen in geeigneter Menge und Größenverteilung gebunden. Hydrophobe oder hydrophobierte Stoffe werden durch die anhaftenden Gasblasen an die Flüssigkeitsoberfläche getragen und können dort mit dem Schaum entfernt werden. Verfahren dieser Art sind beispielsweise aus der DE 41 16 916 C2 bekannt und haben einen hohen technischen Standard erreicht. Zur Erzeugung der Gasblasen und Mischung mit der Suspension kommen oftmals selbstansaugende Injektoren zum Einsatz, bei welchen der aus einer Düse austretende Strom der mit den Störstoffen beladenen Suspension einen Unterdruck erzeugt und Gas ansaugt, welches infolge des Impulsaustausches zwischen Gas und Flüssigkeit damit vermischt wird. Eine derartige Vorrichtung ist beispielsweise in der DE 34 12 431 A1 beschrieben.

In der DE 198 45 536 wird ein Deinkingverfahren beschrieben, bei dem Flotationsblasen in einer durch Gas gesättigten Suspension und anschließendes Entspannen erzeugt werden, wobei anhaftende Fasern in einem anschließenden Schritt abgetrennt werden. Bei diesem Verfahren wird bei Drücken von ca. 0,6 bis 1,2 bar gearbeitet und es lässt sich die Größe der entstehenden Blasen nur sehr schwer regulieren.

Weiters ist es bekannt, unter Druck stehendes und mit Gas gesättigtes Wasser in eine Flotationszelle einzudüsen und dadurch die Ausbildung von Gasbläschen zu bewirken. Die WO90/10502 A1 beschreibt eine dafür vorgesehene Düse, bei welcher die Durchströmpassagen und Flussrichtungen veränderbar sind, wodurch eine einfache Reinigung der Düse möglich ist.

Ebenfalls ist aus der DE 37 17 947 A1 ein Verfahren bekannt, bei dem nach einer Strahlpumpe ein Wasser/Luftgemisch entspannt und anschließend das zu reinigende Wasser zugeführt wird. Die SU 1 337 007 A1 zeigt ein Mischventil für Milchprodukte, das verstellbar ist.

Die Aufgabe der vorliegenden Erfindung war ein Flotationsverfahren und Vorrichtungen zur Verwendung dabei, welche verbesserte Bedingungen für die Einstellung der optimalen Größe und Menge von Gasbläschen in der Suspension bieten und somit das Verfahren effektiver machen.

Zur Lösung der Aufgabe ist erfindungsgemäß im Rahmen des eingangs beschriebenen Verfahrens vorgesehen, dass das Entspannen der gasgesättigten Flüssigkeit separat und vor dem Einbringen der die Gasbläschen enthaltenden Flüssigkeit in die Suspension mit den Störstoffen durch Eindüsen und durch Aufspreizung eines Treibstrahls der gasgesättigten Flüssigkeit in einem geschlossenen Raum erfolgt. Damit kann die Gasbläschenbildung von der Einbringung in die Flotationszelle und die dabei herrschenden Bedingungen entkoppelt und unabhängig davon optimiert werden und in einfacher Weise und dennoch sehr effektiv die zur Freisetzung der Gasbläschen notwendige Druckdifferenz erzielt werden.

Eine weitere Verbesserung lässt sich dabei erzielen, wenn gemäß einer vorteilhaften Ausführungsform dieses Verfahrens auch das Entspannen der Flüssigkeit separat und anschließend an die Belüftung der Flüssigkeit mit Gas erfolgt.

In bewährter Weise kann dabei das Entspannen der Flüssigkeit der gasgesättigten Flüssigkeit erfolgen.

Um in einfacher Weise eine Anpassung des Druckverlustes bei der Entspannung zu ermöglichen und damit die Gasbläschen-Entstehung für den jeweiligen Einsatz und die gegebenen bzw. gewünschten Bedingungen zu optimieren, ist zur Lösung der Aufgabe weiters eine Düse mit veränderbarem Querschnitt, vorzugsweise auch veränderbarer Querschnittsfläche, vorgesehen, wobei der zentrale Teil der Düse durch einen in den geschlossenen Raum zulaufenden Kegel und der geschlossene Raum durch ein Impulsrohr mit im wesentlichen konstantem Querschnitt und vorzugsweise einem anschließenden Diffusor mit von der Düse weg zunehmendem Querschnitt gebildet ist. Eine derartige Vorrichtung kann bei allen Flotationsanlagen und -zellen eingesetzt werden, auch dann, wenn die Flüssigkeit mit den darin enthaltenen Gasbläschen, insbesondere die Suspension selbst, direkt in die Flotationszelle eingedüst wird.

Vorteilhafterweise ist gemäß einer bevorzugten Ausführungsform vorgesehen, dass die Düse eine ringförmige Durchtrittsöffnung aufweist.

Eine besonders gute Strömungscharakteristik und Aufspreizung des aus der Düse austretenden Flüssigkeitsstrahles ergibt eine Ausführungsform, bei welcher die äußere Begrenzung der Düse lavalförmig gestaltet ist.

Wenn gemäß einem weiteren Erfindungsmerkmal der Kegel in axialer Richtung verschiebbar und/oder um seine Achse drehbar ist, kann damit in einfacher Weise die Querschnittsfläche der Durchtrittsöffnung verändert und somit der erzielbare Druckverlust eingestellt werden bzw. kann damit ein Reinigung der Treibstrahldüse oder das Durchspülen bei Verstopfungen bewirkt werden.

Zur Lösung der Aufgabe ist weiters die Anlage zur Abtrennung von Störstoffen aus Suspensionen mit Hilfe der Flotation erfindungsgemäß dadurch gekennzeichnet, dass die Vorrichtung zum Entspannen der Flüssigkeit getrennt von der Vorrichtung zur Einbringung der Flüssigkeit samt Gasbläschen in die Suspension und von der Flotationszelle angeordnet ist.

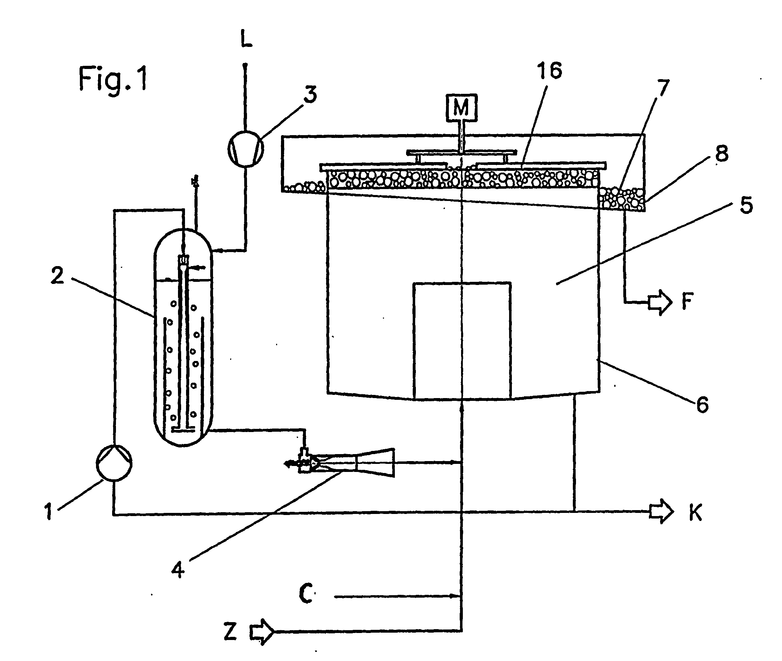

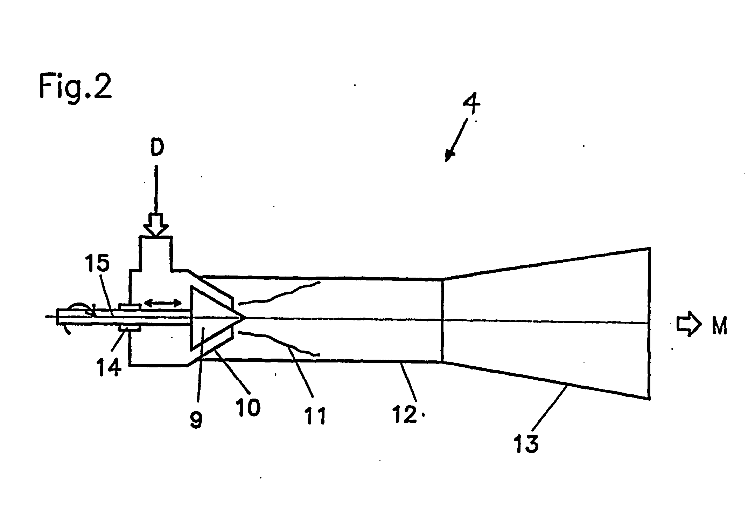

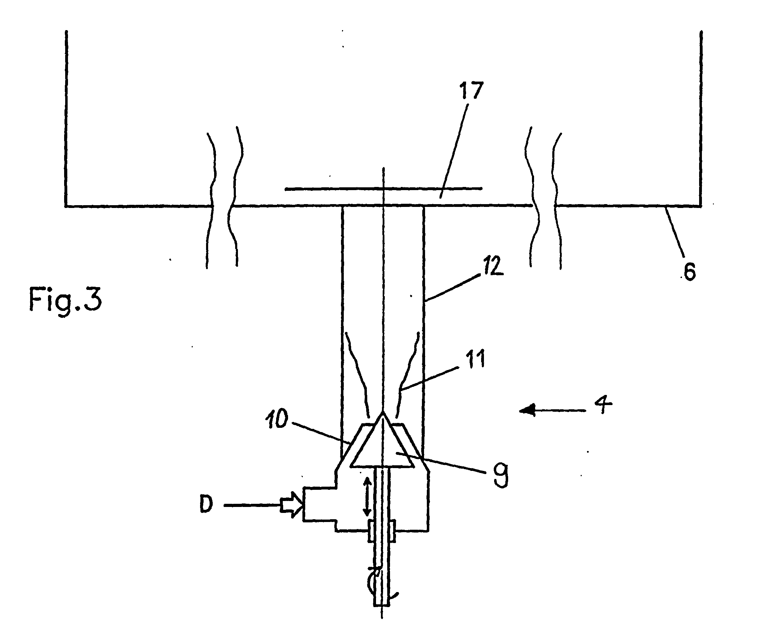

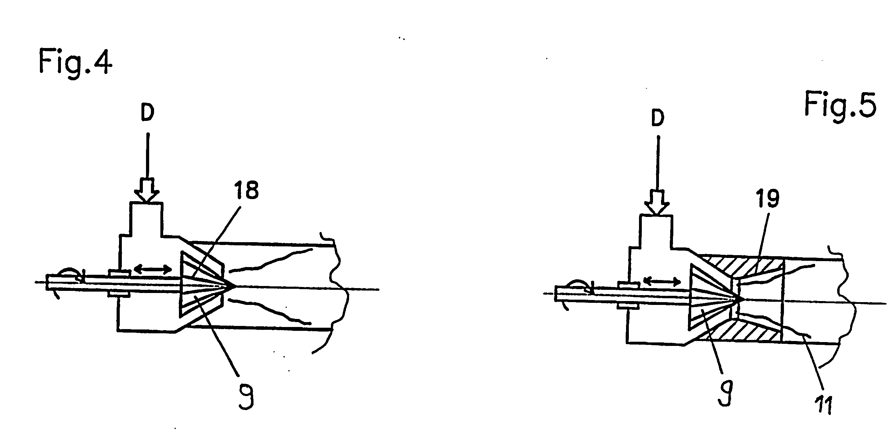

In der nachfolgenden Beschreibung soll die Erfindung anhand der beigefügten Zeichnungen eines bevorzugten Ausführungsbeispieles näher erläutert werden. Dabei zeigt die Fig.1 eine erfindungsgemäße Flotationsanlage in schematischer Darstellung, Fig.2 ist ein in der Anlage der Fig. 1 bevorzugt zur Anwendung gelangender Entspannungsinjektor in schematischer Darstellung, die Fig. 3 zeigt schematisch einen Entspannungsinjektor gemäß einer anderen Ausführungsform in Kombination mit einem Radialdiffusor, Fig. 4 ist eine schematische Darstellung des Anfangsbereiches eines erfindungsgemäßen Entspannungsinjektors mit spezieller Ausbildung des zentralen Kegels und Fig. 5 ist schließlich eine schematische Darstellung entsprechend der Fig. 4, jedoch mit einer lavalförmig ausgeführten Treibstrahldüse.

In Fig.1 erkennt man die schematisch dargestellte Flotationsanlage mit der erfindungsgemäßen Vorrichtung zum Entspannen der zuvor gasgesättigten Flüssigkeit in Form eines Entspannungsinjektors 4, wobei in dieser Vorrichtung die für die Flotation notwendigen Gasbläschen in der Flüssigkeit zur Ausbildung gebracht werden. Die eigentliche Flotationszelle 6 ist zum überwiegenden Teil mit einer Suspension 5 gefüllt, an deren Oberfläche sich, wie erwähnt, ein aus den Gasbläschen entstehender Schaum 7 bildet, der einen möglichst großen Teil der auszuflotierenden Feststoffpartikel enthält. Er wird mit einem Räumer 16 in die Schaumrinne 8 transportiert und kann als Flotat F abfließen.

Ein Teil des gereinigten Klarwassers K wird als Recyclestrom mit der Druckerhöhungspumpe 1 auf den gewünschten Sättigungsdruck zwischen 3 und 10 bar gebracht und in einen Sättigungsbehälter 2 eingebracht. Luft aus der Umgebung wird mit einem Kompressor 3 auf den erforderlichen Sättigungsdruck verdichtet, ebenfalls in den Sättigungsbehälter 2 eingebracht und durch intensiven Stoffaustausch in der Flüssigkeit gelöst. Die aufgesättigte Druckflüssigkeit gelangt dann zur Druckreduktion in den speziell zur Erzeugung allerfeinster Gasblasen gestalteten Entspannungsinjektor 4 und wird mit dem mit Feststoffen verunreinigten Zulauf Z und eventueller Beigabe von Flotationshilfsmitteln C in die Flotationszelle 6 eingebracht, wo der Flotationsprozess stattfindet. Die durch Druckentspannung gebildeten Blasen haften an hydrophoben Feststoffen an und tragen sie zur Oberfläche. Die durch Flotation gereinigte Suspension tritt als Klarwasser K aus der Flotationszelle aus.

In Fig.2 ist die erfindungsgemäße Vorrichtung 4 zur Druckreduktion und zur Erzeugung allerfeinster Gasblasen dargestellt. Die mit Luft aufgesättigte Druckflüssigkeit D aus dem Sättigungsbehälter tritt vor der Treibstrahldüse 10 in den Entspannungsinjektor 4 ein. Die notwendige Druckreduktion in der Treibstrahldüse 10 kann durch eine Veränderung des Ringspaltquerschnitts zwischen dem inneren Rand der Treibstrahldüse 10 und dem zentral und koaxial angeordneten Kegel 9 eingestellt werden. Dazu kann der Kegel 9 in axialer Richtung auf die Treibstrahldüse 10 hin oder von dieser weg verschoben werden. Vorzugsweise wird dies durch Drehung des auf einer Gewindestange 15 befestigten Kegels 9 bewirkt, welche Gewindestange 15 im Gewinde 14 drehbar gelagert ist. Durch diese Drehbewegung wird weiters eine zusätzliche Kraft auf eventuell vorhandene Feststoffteilchen oder Flocken ausgeübt, was eine Reinigung der Treibstrahldüse 10 bewirkt. Der aus der Treibstrahldüse 10 austretende, schlagartig entspannte Flüssigkeitsstrom erzeugt durch seine Aufspreizung als Freistrahl 11 im Impulsrohr 12 einen Unterdruck, wodurch mehr und vor allem feinere Gasblasen entstehen. Die Mikroblasen-Dispersion M verlässt nach Passieren eines auf das Impulsrohr 12 folgenden Diffusors 13 den Entspannungsinjektor 4.

Wie in Fig.3 gezeigt wird, kann die erfindungsgemäße Vorrichtung 4 unmittelbar vor der Flotationszelle 6 angeordnet sein. Dabei ist unmittelbar hinter dem Impulsrohr 12 des Entspannungsinjektors 4, welches Impulsrohr 12 an die Flotationszelle 6 vorzugsweise angebaut ist, in dieser Flotationszelle 6 ein Radialdiffusor 17 zur besseren Verteilung der Blasendispersion vorgesehen.

Beim Entspannungsinjektor 4 der Fig. 4 ist der zentrale Kegel 9 zur Einstellung der Größe des Ringspaltes der Treibstrahldüse 10 durch dessen axiale Bewegung mit zusätzlichen feinen Rillen 18 versehen. Damit kann die Reinigungswirkung bei Drehung des Kegels 9 noch weiter verbessert werden.

Der Entspannungsinjektor 4 in der Ausführungsform der Fig.5 ist mit einer lavalförmig ausgeführten Treibstrahldüse 19 versehen, die zur noch besseren Aufspreizung des Flüssigkeitsstrahles 11 bei komplizierten (z.B. faserhaltigen) Medien dient, was auch bei diesen Medien eine beträchtliche Vergrößerung des erzeugbaren Unterdruckes und somit die Bildung feinerer Gasblasen bewirkt.

## Patentansprüche

1. Verfahren zur Abtrennung von Störstoffen aus Suspensionen durch Flotation, umfassend die Belüftung einer Flüssigkeit mit Gas bis zur Sättigung und anschließendes Entspannen der gasgesättigten Flüssigkeit unter Bildung von Gasbläschen, **dadurch gekennzeichnet, dass** das Entspannen der gasgesättigten Flüssigkeit separat und vor dem Einbringen der die Gasbläschen enthaltenden Flüssigkeit in die Suspension mit den Störstoffen durch Eindüsen und durch Aufspreizung eines Treibstrahls der gasgesättigten Flüssigkeit in einem geschlossenen Raum erfolgt.

2. Verfahren nach Anspruch 1, **dadurch gekennzeichnet, dass** das Entspannen der Flüssigkeit separat und anschließend an die Belüftung der Flüssigkeit mit Gas erfolgt.

3. Verfahren nach Anspruch 1 oder 2, **dadurch gekennzeichnet, dass** die gasgesättigte Flüssigkeit vor dem Entspannen einen Druck von zwischen 3 und 10 bar aufweist.

4. Vorrichtung zum Erzeugen von Gasbläschen in einer gasgesättigten Flüssigkeit, **gekennzeichnet durch** eine Düse (10) mit veränderbarem Querschnitt, vorzugsweise auch veränderbarer Querschnittsfläche die in einen geschlossenen Raum mündet, wobei der zentrale Teil der Düse (10) **durch** einen in den geschlossenen Raum (12) zulaufenden Kegel (9) gebildet und der geschlossene Raum **durch** ein Impulsrohr (12) mit im wesentlichen konstantem Querschnitt und einem anschließenden Diffusor (13) mit von der Düse weg zunehmendem Querschnitt gebildet ist, wobei der Durchmesser des Impulsrohres (12) wesentlich größer ist, als der Durchmesser der Öffnung der Düse (10).

5. Vorrichtung nach Anspruch 4, **dadurch gekennzeichnet, dass** die Düse (10) eine ringförmige Durchtrittsöffnung aufweist

6. Vorrichtung nach Anspruch 4 oder 5, **dadurch gekennzeichnet, dass** die Düse (19) als Lavaldüse ausgestaltet ist

7. Vorrichtung nach einem der Ansprüche 4 bis 6 **dadurch gekennzeichnet, dass** der Kegel (9) in axialer Richtung verschiebbar und/oder um seine Achse drehbar ist.

8. Vorrichtung zur Abtrennung von Störstoffen aus Suspensionen durch Flotation, umfassend zumindest Vorrichtungen zur Belüftung einer Flüssigkeit mit Gas bis zur Sättigung, zum anschließenden Entspannen der gasgesättigten Flüssigkeit unter Bildung von Gasbläschen, zur Einbringung der Flüssigkeit samt Gasbläschen in die Suspension und eine Flotationszelle, **dadurch gekennzeichnet, dass** die Vorrichtung (4) eine Düse (10) mit veränderbarem Querschnitt, vorzugsweise auch veränderbarer Querschnittsfläche aufweist, die in einen geschlossenen Raum mündet, wobei der zentrale Teil der Düse (10) durch einen in den geschlossenen Raum (12) zulaufenden Kegel (9) gebildet und der geschlossene Raum durch ein Impulsrohr (12) mit im wesentlichen konstantem Querschnitt und einem anschließenden Diffusor (13) mit von der Düse weg zunehmendem Querschnitt gebildet ist, und wobei der Durchmesser des Impulsrohres (12) wesentlich größer ist, als der Durchmesser der Öffnung der Düse (10) und die Vorrichtung (4) zum Entspannen der Flüssigkeit getrennt von der Vorrichtung (2) zur Einbringung der Flüssigkeit samt Gasbläschen in die Suspension und von der Flotationszelle (6) angeordnet ist.

## Claims

1. Process for separating impurities from a suspension by flotation, covering aeration of a liquid with gas until saturation, followed by expansion of the gas-saturated liquid, during which gas bubbles form, **characterised by** the expansion of the gas-saturated liquid taking place separately and before the liquid containing the gas bubbles is added to the suspension with the impurities and by spraying and diverging a propulsion jet of the gas-saturated liquid in an enclosed area.

2. Process according to Claim 1, **characterised by** the expansion of the liquid taking place separately and after aeration of the liquid with gas.

3. Process according to Claim 1 or 2, **characterised by** the gas-saturated liquid having a pressure of between 3 and 10 bar before being expanded.

4. Device for generating gas bubbles in a gas-saturated liquid, **characterised by** a nozzle (10) with changeable cross section, preferably also with changeable cross-sectional area, which leads into a closed chamber, where the central part of the nozzle (10) is formed by a cone (9) tapering into the closed chamber (12) and the closed chamber is formed by a pulse tube (12) with essentially constant cross section and an adjoining diffusor (13) with increasing cross section away from the nozzle, with the diameter of the pulse tube (12) being considerably larger than the diameter of the opening of the nozzle (10).

5. Device according to Claim 4, **characterised by** the nozzle (10) having an annular clearance opening.

6. Device according to Claim 4 or 5, **characterised by** the nozzle (19) being a Laval-type nozzle.

7. Device according to one of Claims 4 to 6, **characterised by** the cone (9) being movable in axial direction and/or rotated round its own axis.

8. Device for separating impurities from a suspension by flotation, covering at least devices for aeration of a liquid with gas until saturation, followed by expansion of the gas-saturated liquid, during which gas bubbles form, for feeding the liquid with the gas bubbles into the suspension, and a flotation cell, **characterised by** the device (4) having a nozzle (10) with changeable cross section, preferably also with changeable cross-sectional area, which leads into a closed chamber, where the central part of the nozzle (10) is formed by a cone (9) tapering into the closed chamber (12) and the closed chamber is formed by a pulse tube (12) with essentially constant cross section and an adjoining diffusor (13) with increasing cross section away from the nozzle, and where the diameter of the pulse tube (12) is considerably larger than the diameter of the opening of the nozzle (10) and the device (4) for expanding the liquid is arranged separately from the device (2) for infeed of the liquid with the gas bubbles into the suspension and from the flotation cell (6).

## Revendications

1. Procédé de séparation d'impuretés à partir d'une suspension moyennant la flottation, comportant l'aération d'un liquide avec du gaz jusqu'au point de saturation, suivi de l'expansion du liquide saturé de gaz, pendant laquelle des bulles de gaz se forment, **caractérisé en ce que** l'expansion du liquide saturé de gaz a lieu séparément et avant d'apporter le liquide contenant des bulles de gaz à la suspension contenant les impuretés, et en arrosant et divergeant un jet de propulsion de liquide saturé de gaz dans une aire fermée.

2. Procédé selon la revendication 1, **caractérisé en ce que** l'expansion du liquide a lieu séparément et après aération du liquide avec du gaz.

3. Procédé selon la revendication 1 ou 2, **caractérisé en ce que** le liquide saturé de gaz a une pression allant de 3 à 10 bar avant son expansion.

4. Dispositif de génération de bulles de gaz dans un liquide saturé de gaz **caractérisé par** une tuyère (10) avec coupe transversale changeable, de préférence aussi avec une aire de coupe transversale changeable, qui mène dans une chambre fermée, où la partie centrale de la tuyère (10) est constituée par un cône (9) taillant vers la chambre fermée (12) et cette chambre fermée est formée par un tuyau d'impulsions (12) avec coupe transversale essentiellement constante et un diffuseur (13) adjacent dont la coupe transversale augmente à partir de la tuyère, où le diamètre du tuyau d'impulsion (12) est beaucoup plus large que le diamètre de l'ouverture de la tuyère (10).

5. Dispositif selon la revendication 4, **caractérisé en ce que** la tuyère (10) a une ouverture de passage annulaire.

6. Dispositif selon la revendication 4 ou 5, **caractérisé en ce que** la tuyère (19) est une tuyère de Laval.

7. Dispositif selon l'une des revendications 4 à 6, **caractérisé en ce que** le cône (9) est amovible au sens axial et/ou tourne autour de son propre axe.

8. Dispositif de séparation d'impuretés à partir d'une suspension moyennant la flottation, comportant au moins des dispositifs d'aération d'un liquide avec du gaz jusqu'au point de saturation, suivi de l'expansion du liquide saturé de gaz, pendant laquelle des bulles de gaz se forment, pour l'apport du liquide aux bulles de gaz dans la suspension, et une cellule de flottation, **caractérisé en ce que** le dispositif (4) a une tuyère (10) avec coupe transversale changeable, de préférence aussi avec une aire de coupe transversale changeable, qui mène dans une chambre fermée, où la partie centrale de la tuyère (10) est constituée par un cône (9) taillant vers la chambre fermée (12) et cette chambre fermée est formée par un tuyau d'impulsion (12) avec coupe transversale essentiellement constante et un diffuseur (13) adjacent, dont la coupe transversale augmente à partir de la tuyère, et où le diamètre du tuyau d'impulsion (12) est beaucoup plus large que le diamètre de l'ouverture de la tuyère (10) et le dispositif (4) d'expansion du liquide est disposé séparément du dispositif (2) d'apport du liquide aux bulles de gaz dans la suspension, et séparément de la cellule de flottation (6).
